# EUROPÄISCHE PATENTSCHRIFT

(11) **EP 0 510 392 B1**
(45) Veröffentlichungstag und Bekanntmachung des Hinweises auf die Patenterteilung: **22.01.1997**
(21) Anmeldenummer: 92105575.2
(22) Anmeldetag: 01.04.1992
(51) Int. Cl.: C09B 67/20

(54) **Verfahren zur Herstellung von leicht dispergierbaren Pigmentgranulaten**
Process for the preparation of easily dispersable pigment granules
Procédé de préparation de granulés de pigment facilement dispersables

(30) Priorität: 24.04.1991 DE 4113318
(43) Veröffentlichungstag der Anmeldung: 28.10.1992
(73) Patentinhaber: BASF Aktiengesellschaft, 67063 Ludwigshafen (DE)
(72) Erfinder: Roth, Karl, W-6703 Limburgerhof (DE)

(56) Entgegenhaltungen:
- FR-A- 2 194 755
- FR-A- 2 332 052
- PATENT ABSTRACTS OF JAPAN vol. 10, no. 68 (P-437)(2125) 18. März 1986

## Beschreibung

Die vorliegende Erfindung betrifft ein neues Verfahren zur Herstellung von leicht dispergierbaren Pigmentgranulaten.

Pigmente in Granulatform weisen gegenüber den entsprechenden Pigmentpulvern die Vorteile deutlich geringerer Staubbelästigung und besserer Rieselfähigkeit bei Containerbelieferungen auf und sind damit besonders im Druckfarben- und Anstrichmittelbereich von zunehmendem Interesse.

Zur Herstellung staubarmer Pigmentformen sind bereits verschiedene Methoden bekannt: Beispielsweise kann der bei der Pigmentherstellung erhaltene Pigmentpreßkuchen durch eine Lochplatte gedrückt und anschließend getrocknet werden. Dabei werden Stranggranulate von etwa 0,3 bis 0,8 cm Dicke und 0,5 bis 2 cm Länge erhalten.

Getrocknete Stückware kann über einen Siebzerkleinerer auf eine gewünschte Korngröpe gebracht werden. Dabei entsteht jedoch ein heterogenes Teilchenspektrum mit der Maschenweite des Siebes als oberer Teilchengröße.

Durch Belegung der Oberfläche von Pigmenten mit beispielsweise Mineralölen, Harzen oder Phthalsäureestern können ebenfalls staubfreie Produkte erhalten werden, deren Verträglichkeit mit dem anzufärbenden Substrat jedoch gegeben sein muß.

Perlgranulate können schließlich durch gezielte Wahl des Lösungsmittels bei der Mahlung, z.B. durch Mischen eines nicht-wasserlöslichen organischen Lösungsmittels mit Wasser oder durch Zugabe von Salz zu wasserlöslichen organischen Löungsmitteln, hergestellt werden.

Alle genannten Pigmentformen haben jedoch im Vergleich zu den Pigmentpulvern den entscheidenden Nachteil, daß sie deutlich schlechter dispergierbar sind.

In der FR-A-2194755 werden feste Farbstoffschäume beschrieben, die durch Kneten von wäßrigen Farbstoffphasen in Gegenwart von Schaummitteln und anschließendes Trocknen hergestellt werden und sich bei der Anwendung in wäßrigen Färbeflotten auflösen.

Der Erfindung lag die Aufgabe zugrunde, staubarme und gleichzeitig leicht dispergierbare Pigmentformen herzustellen.

Demgemäß wurde ein neues Verfahren zur Herstellung von leicht dispergierbaren Pigmentgranulaten gefunden, welches dadurch gekennzeichnet ist, daß man in einer wäßrigen Suspension des Pigmentes unter intensivem Rühren ein mit der Suspension nicht reagierendes Gas in feinen Blasen im wesentlichen drucklos dispergiert und die so erhaltene Pigmentsuspension durch Sprühtrocknung oder durch mechanische Abtrennung der Flüssigkeit, Formgebung des noch feuchten Pigmentkuchens und anschließende Trocknung in die Pigmentgranulate überführt.

Beim erfindungsgemäßen Verfahren ist als mit der Suspension nicht reagierendes Gas Luft besonders bevorzugt. Weitere geeignete Gase sind beispielsweise Stickstoff und Kohlendioxid.

Durch das erfindungsgemäße Verfahren können leicht dispergierbare Granulate aller organischen und anorganischen Pigmente hergestellt werden. Von besonderem Interesse ist es für solche Pigmente, die in Druckfarben oder Anstrichmitteln eingesetzt werden. Beispielsweise seien Heliogen®- und Lithol®-Marken genannt.

Verfahrenstechnisch geht man zweckmäßigerweise so vor, daß man in einer Dispergiermaschine in die Pigmentsuspension in der Regel 0,5 bis 3 m³, bevorzugt 1 bis 1,5 m³ Luft pro m³ Suspension einleitet, die durch intensives Rühren (der Energieeintrag beträgt dabei etwa bis zu 0,5 kWh/kg Suspension) in Form feiner Blasen von <20 µm Größe gleichmäßig in der Suspension verteilt wird.

Dabei können sowohl diskontinuierlich als auch kontinuierlich arbeitende Dispergiergeräte wie ein Ultra-Turrax oder ein Dispax-Reaktor eingesetzt werden. Verwendet man einen Dispax-Reaktor, so wird man in der Regel Druckluft von etwa 1 bis 3 bar, wie sie üblicherweise zur Verfügung steht, in die Suspension einleiten, während bei einem Ultra-Turrax automatisch die umgebende Außenluft eingesaugt wird.

Von besonderem Vorteil ist, daß die Pigmentsuspension beim erfindungsgemäßen Verfahren während und nach der Begasung unter Normaldruck gehandhabt werden kann.

Die nachfolgende Abtrennung der Flüssigkeit und Trocknung des Pigmentes erfolgt nach bekannten Methoden, entweder durch Sprühtrocknung, bei der die begaste Pigmentsuspension von oben in einen Sprühturm eingedüst wird, von unten im Gegenstrom ein heißes Gas wie Luft oder Stickstoff eingespeist wird und die Pigmentgranulate dann als Kügelchen nach unten fallen, oder durch mechanische Abtrennung der Flüssigkeit, z.B. durch Filtration, Formgebung des erhaltenen Pigmentpreßkuchens, der eine Restfeuchte von in der Regel 50 bis 80 Gew.-% Wasser aufweist, durch eine Formpresse beispielsweise zu Strängen und anschließende Band- oder Schranktrocknung.

Erfindungswesentlich ist, daß die in der Suspension verteilten Luftbläschen auch im Preßkuchen erhalten bleiben, so daß bei der Trocknung Hohlräume in den Granulaten entstehen, die im Vergleich zu einer nicht begasten Probe eine Volumenvergrößerung von in der Regel bis zu 150 %, besonders von 50 bis 100 % bewirken. In diese Hohlräume können Bindemittel leicht eindringen, und die Granulate zerfallen leicht bei der Dispergierung.

Dieser Effekt, der allein schon durch die Eindispergierung von Luft in die Pigmentsuspension erreicht wird, kann durch Zusatz von Harz noch verstärkt werden, wobei darauf zu achten ist, daß zu hohe Harzzusätze die Farbstärke negativ beeinflussen können.

Geeignete Harze sind solche, die üblicherweise zur Herstellung von Pigmentzubereitungen dienen, wie besonders Kolophonium und dessen Derivate wie auch die Umsetzungsprodukte mit Malein- oder Fumarsäureanhydrid und Alkydharze.

In der Regel betragen mögliche Harzzusätze 5 bis 30 Gew.-%, vorzugsweise 10 bis 20 Gew.-%, bezogen auf das Pigment. Das Harz kann der Pigmentsuspension als Harzseife, d.h. in Form einer alkalischen Lösung, z.B. in Natronlauge, zugesetzt werden und nach der Begasung durch Zugabe von Mineralsäuren wie Schwefelsäure oder organischen Säuren wie Essigsäure gefällt werden oder direkt bei der Begasung in feinst gefällter Form zugegeben werden.

Selbstverständlich kann die Pigmentsuspension auch weitere Additive enthalten. Als Beispiele seien üblicherweise verwendete Dispergiermittel wie Polyhydroxystearinsäuren und deren Derivate (Solsperse®-Produkte der Fa. ICI), Paraffine, Türkischrot und Dispergierblau (Salz von Tris-(dimethylaminomethylen)-Kupferphthalocyanin und Dodecylbenzolsulfonsäure) genannt.

Mit Hilfe des erfindungsgemäßen Verfahrens können Pigmentgranulate, die nicht nur staubarm sondern auch gleichzeitig leicht dispergierbar sind, in verfahrenstechnisch einfacher Weise hergestellt werden. Die Pigmentgranulate sind leicht in Bindemitteln vordispergierbar, so daß bei Perlmühlen- oder Dreiwalzenstuhlanreibungen keine Probleme auftreten.

### Beispiel 1

Eine etwa 5 gew.-%ige wäßrige Lithol®-Rubin-Pigmentsuspension (Colour Index C.I. 15850) wurde 5 min an der Luft mit einem Ultra-Turrax-Gerät der Fa. Janke und Kunkel (Stauffen/Breisgau) behandelt, wobei sich das Volumen der Suspension verdoppelte.

Der nach dem Absaugen und Waschen erhaltene lockere Preßkuchen wurde durch eine Formpresse zu Stränglingen geformt und bei 80°C in 10 h getrocknet.

Das getrocknete staubarme Granulat wies ein gegenüber einer unbehandelten Probe verdoppeltes Schüttvolumen auf. Es zerfiel sofort bei der Anreibung in einem Offsetfirnis und entwickelte sehr schnell seine Farbstärke.

### Beispiel 2

Es wurde wie in Beispiel 1 verfahren, jedoch wurden bei der Ultra-Turrax-Behandlung 100 Gew.-%, bezogen auf das Pigment, einer 10 gew.-%igen wäßrigen Kolophonium-Harzseifelösung (Na-Salz) zugegeben, das anschließend durch Zugabe von Essigsäure bis zum Erreichen eines pH-Wertes von etwa 5,5 ausgefällt wurde.

Das erhaltene Granulat zeigte gegenüber dem Granulat aus Beispiel 1 leicht verbesserte Eigenschaften und konnte nach geringer Vordispergierung in einem Offsetfirnis problemlos auf einem Dreiwalzenstuhl verarbeitet werden.

In der folgenden Tabelle sind Meßwerte zum Dispergierverhalten von Lithol-Rubin-Proben der Beispiele 1 und 2 sowie einer unbehandelten Vergleichsprobe nach 10-minütiger Vordispergierung in einem Dispermat-Dissolver (Zahnscheibe 3 cm Durchmesser, 12000 U/min) bei 70°C und anschließender Anreibung auf einem Dreiwalzenstuhl SDY 200 der Fa. Bühler bei 35°C und verschiedenen Anpreßdrücken zusammengestellt.

Der hierbei verwendete Offsetfirnis bestand aus 38 Gew.-% eines phenolmodifizierten Kolophonium-Harzes (Alresat® SKA der Fa. Albert, Wiesbaden), 42 Gew.-% Lackleinöl und 20 Gew.-% Mineralöl PKWF 6/9 (Fa. Haltermann, Hamburg). Das Gewichtsverhältnis Firnis zu Pigment betrug jeweils 4,6:1.

Die Skala der Meßwerte reicht von 1 (schlecht; Agglomerate von >100 µm) bis 7 (sehr gut; Agglomerate <5 µm).

**Tabelle**

| | Dispermat 10 min | Dreiwalzenstuhl | | |
|---|---|---|---|---|
| | | 1 x 10 bar | 2 x 10 bar | 3 x 10 bar |
| Beispiel 1 | 2 | 6 | 7 | 7 |
| Beispiel 2 | 4 | 7 | 7 | 7 |
| Vergleichsprobe | 1 | 5 | 6 | 7 |

### Beispiel 3

Ein Heliogen®-Blau-Pigmentpreßkuchen (C.I. 74 160) wurde durch Zugabe von Wasser auf eine rührfähige Konsistenz (ca. 5 bis 10 Gew.-% Feststoff) eingestellt. Die erhaltene Pigmentsuspension wurde mit einer Mohnopumpe zu dem Dispax-Reaktor DR 366 der Fa. Janke und Kunkel (Stauffen/Breisgau) gepumpt, wobei in das Dispergiergerät 1 m³ Luft pro m³ Suspension zugeführt wurde, so daß sich das Volumen der Suspension verdoppelte.

Die weitere Verarbeitung erfolgte analog zu Beispiel 1.

Das erhaltene Granulat wies ein gegenüber einer unbehandelten Probe verdoppeltes Schüttvolumen auf. Es entwickelte schnell seine Farbstärke in einem Offsetfirnis und konnte problemlos sowohl in einer Rührwerkskugelmühle als auch auf einem Dreiwalzenstuhl angerieben werden.

### Beispiel 4

In einem 1,5 m³-Sprühtrockner wurden von oben 2 1 einer 8 gew.-%igen wäßrigen Heliogen-Blau-Pigmentsuspension, die 10 min an der Luft mit einem Ultra-Turrax-Gerät behandelt worden war, in 60 min mit einer Mohnopumpe durch eine 0,5 mm-Düse gepumpt. Gleichzeitig wurde auf ca. 180°C erwärmte Luft mit 1,5 bar in den Sprühbereich eingeblasen.

Die zerstäubte Pigmentsuspension trocknete zu kleinen Kügelchen von ca. 50 bis 200 µm Durchmesser, die vom Luftstrom mitgetragen in einem Zyklon abgeschieden wurden.

Das erhaltene Mikrogranulat war staubarm, rieselfähig und gut verteilbar in Druck- und Lackfarben.

## Patentansprüche

1. Verfahren zur Herstellung von leicht dispergierbaren Pigmentgranulaten, dadurch gekennzeichnet, daß man in einer wäßrigen Suspension des Pigmentes unter intensivem Rühren ein mit der Suspension nicht reagierendes Gas in feinen Blasen im wesentlichen drucklos dispergiert und die so erhaltene Pigmentsuspension durch Sprühtrocknung oder durch mechanische Abtrennung der Flüssigkeit, Formgebung des noch feuchten Pigmentkuchens und anschließende Trocknung in die Pigmentgranulate überführt.

2. Verfahren nach Anspruch 1, dadurch gekennzeichnet, daß man als mit der Suspension nicht reagierendes Gas Luft verwendet.

3. Verfahren nach Anspruch 1 oder 2, dadurch gekennzeichnet, daß die wäßrige Suspension des Pigmentes ein Harz enthält, das üblicherweise zur Herstellung von Pigmentzubereitungen dient.

## Claims

1. A process for preparing readily dispersible pigment granules which comprises dispersing, in an aqueous suspension of the pigment, by thorough stirring, a gas which does not react with the suspension in fine bubbles under essentially atmospheric pressure and converting the resulting pigment suspension into pigment granules by spray drying or by mechanical removal of the liquid, shaping of the still moist pigment cake and subsequent drying.

2. A process as claimed in claim 1, wherein air is used as the gas which does not react with the suspension.

3. A process as claimed in claim 1 or Z, wherein the aqueous suspension of the pigment includes a resin which is customarily used for preparing pigment preparations.

## Revendications

1. Procédé de préparation de granulés de pigment. facilement dispersables, caractérisé en ce que l'on disperse dans une suspension aqueuse du pigment, sous agitation énergique et essentiellement sans pression, un gaz en fines bulles qui ne réagit pas avec la suspension, et on transforme la suspension de pigment ainsi obtenue en les granulés de pigment par séchage par pulvérisation ou par séparation mécanique du liquide, façonnage du gâteau de pigment encore humide, suivi de séchage.

2. Procédé selon la revendication 1, caractérisé en ce que l'on utilise de l'air comme gaz ne réagissant pas avec la suspension.

3. Procédé selon la revendication 1 ou 2, caractérisé en ce que la suspension aqueuse du pigment contient une résine qui sert ordinairement à la préparation de compositions pigmentaires.
